**Europäisches Patentamt**

**European Patent Office**

**Office européen des brevets**

(11) Veröffentlichungsnummer: **0 228 498**
**A2**

## (12) EUROPÄISCHE PATENTANMELDUNG

(21) Anmeldenummer: **86102991.6**

(22) Anmeldetag: **06.03.86**

(51) Int. Cl.⁴: **B 23 K 20/08**

(30) Priorität: **29.08.85 DE 3530872**

(43) Veröffentlichungstag der Anmeldung:
**15.07.87 Patentblatt 87/29**

(84) Benannte Vertragsstaaten:
**AT BE CH DE FR GB IT LI NL SE**

(71) Anmelder: **GVM Verbundmetalle GmbH & Co. KG**
**Schlavenhorst 117**
**D-4290 Bocholt(DE)**

(72) Erfinder: **Hampel, Heinrich, Dr.-Ing.**
**Mussumer Ringstrasse 9**
**D-4290 Bocholt(DE)**

(74) Vertreter: **Keil, Rainer A., Dipl.-Phys. Dr. et al,**
**Patentanwälte KEIL & SCHAAFHAUSEN**
**Ammelburgstrasse 34**
**D-6000 Frankfurt am Main 1(DE)**

(54) Verfahren zum Sprengplattieren von Blechen.

(57) Die Erfindung bezieht sich auf ein Verfahren zum Sprengplattieren von Blechen, bei dem das aufzuplattierende Blech mit im Abstand voneinander angeordneten noppenartigen Erhöhungen ausgerüstet ist, mit seiner ebenen Seite auf das Trägerblech aufgelegt ist und im Bereich der nach außen vorstehenden noppenartigen Erhöhungen der Sprengstoff aufgelegt und gezündet wird.

EP 0 228 498 A2

"Verfahren zum Sprengplattieren von Blechen"

Die Erfindung bezieht sich auf ein Verfahren zum Sprengplattieren von Blechen.

Aus der DE-B-12 29 821 ist ein Verfahren zum Herstellen von mehrschichtigen Metallkörpern bekannt, bei welchem die zu verbindenden Bleche für die Plattierung mit Hilfe von Sprengmitteln in einem gewissen Minimalabstand voneinander gehalten werden. Dies kann bei den bekannten Verfahren dadurch geschehen, daß entweder zwischen den beiden zu verbindenden Blechen Abstandshalter od. dgl. angeordnet sind, oder daß das eine oder beide Bleche mit als Abstandshalter wirkenden kleinen Erhebungen, Nasen od. dgl. ausgerüstet sind.

Hier ist es erforderlich, die gesamte Oberfläche des aufzuplattierenden Bleches mit Sprengstoff abzudecken, der dann entsprechend gezündet wird.

In vielen Bereichen der Technik ist das Plattieren von Blechen heute erforderlich, um gewisse Korrosionsfestigkeiten zu erreichen. Da mit dem bekannten Sprengstoffplattierverfahren den in der Praxis gestellten Anforderungen nicht entsprochen werden kann, wird heute üblicherweise so vorgegangen, daß das aufzuplattierende Blech Bohrungen aufweist, in deren Randbereich nunmehr durch entsprechende Schweißarbeit das aufzuplattierende Blech an dem tragenden Blech festgelegt wird. Anschließend werden dann die Bohrungen wieder durch eine aufgesetzte Verschlußklappe verschlossen.

Es ist offensichtlich, daß einerseits zur Herstellung derartiger Bleche ein erheblicher Arbeitsaufwand erforderlich ist, zum andern aber auch eine Oberfläche erzielt wird, die vielen Anwendungsfällen nicht gerecht wird.

Der Erfindung liegt die Aufgabe zugrunde, die bekannte Verfahrensweise dahingehend zu verbessern, daß auch ein punktförmiges Festlegen aufzuplattierender Bleche an den Trägerblechen möglich ist.

Diese der Erfindung zugrundeliegende Aufgabe wird durch die Lehre des Hauptanspruches gelöst.

Die Erfindung geht von der Überlegung aus, daß es möglich ist, den erforderlichen Abstand zwischen dem aufzuplattierenden und dem tragenden Blech dadurch herzustellen, daß in dem Blech selbst kleine Erhebungen oder Nasen ausgeformt werden.

Im Gegensatz zu dem im Stand der Technik üblichen Verfahren dienen diese Erhebungen, Nasen od. dgl. nicht als Abstandshalter, sondern sie tragen zur Außenseite hin den die Plattierung vornehmenden Sprengstoff und daher wird das aufzuplattierende Blech lediglich in diesen die Noppen aufweisenden Bereichen an dem tragenden Blech festgelegt.

Durch das Evakuieren des Zwischenraumes zwischen den Blechen drückt der normale atmosphärische Druck auf die Bleche, so daß dadurch das Festlegen der Bleche vor Durchführen der Sprengarbeit verbessert wird.

Der bisher zwischen den Blechen der Verformung der Bleche entgegenstehende Luftwiderstand wird verringert und dadurch wird der Schweißeffekt verbessert.

Schließlich ist die Detonationswelle durch diese Maßnahme zu verringern, so daß insgesamt durch eine solche Anordnung das Verfahren zur Herstellung von sprengplattierten Blechen verbessert werden kann.

Die Evakuierung erfolgt z.B. in einer Größenordnung von mindestens 20 bis aber 90 % der vorhandenen Luft.

Zur Verdeutlichung der Erfindung ist eine Zeichnung beigefügt.

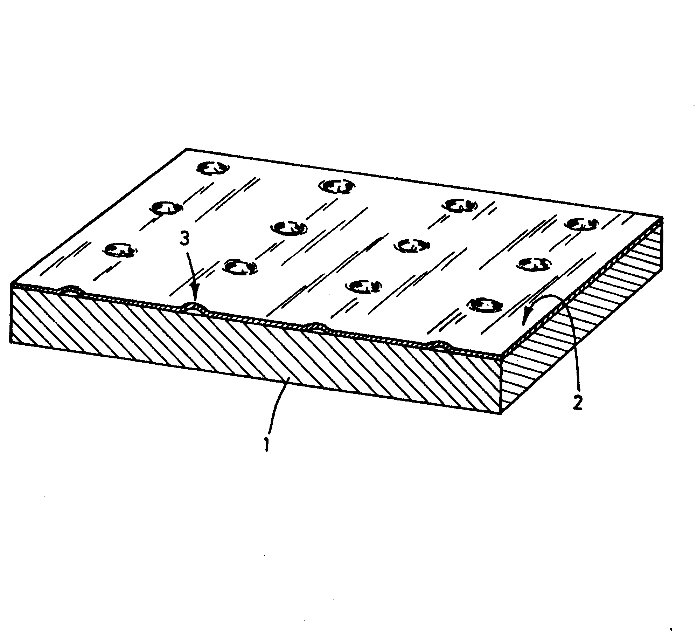

In der Zeichnung ist mit 1 das Trägerblech und mit 2 das aufzuplattierende Blech bezeichnet.

Das aufzuplattierende Blech weist noppenartige Erhöhungen 3 auf, die hinsichtlich ihrer Größe und ihres Abstandes voneinander in Anpassung an die zu erzielenden Verbindungspunkte gewählt sind.

Auf den noppenartigen Erhöhungen 3 wird der Sprengstoff aufgelegt, so daß nach Zünden desselben die noppenartigen Erhöhungen flachgepreßt sind und hier eine innige Verbindung zwischen dem aufzuplattierenden Blech 2 mit dem Trägerblech 1 erfolgt.

In der Zeichnung nicht dargestellt ist die Möglichkeit, die miteinander zu verbindenden Bleche mit einer eine Abdichtung schaffenden Umrandung zu versehen, beispielsweise aus Kunststoff od. dgl., und daß dann eine Evakuierung zwischen dem aufzuplattierenden Blech 2 und dem Trägerblech 1 erfolgt, wodurch die in der voraufgehenden Beschreibung erläuterten Vorteile erzielt werden, nämlich daß einmal das Festlegen der Bleche 1 und 2 aneinander verbessert wird, der zwischen den Blechen 1 und 2 der Verformung entgegenstehende Luftwiderstand verringert und schließlich die Detonationswelle verringert wird.

Patentansprüche:

1.  Verfahren zum Sprengplattieren von Blechen, wobei die miteinander zu verbindenden Bleche im Abstand voneinander angeordnet und unter Zuhilfenahme eines detonierenden Sprengmittels miteinander verbunden werden, dadurch gekennzeichnet, daß das aufzuplattierende Blech (2) mit im Abstand voneinander angeordneten noppenartigen Erhöhungen (3) ausgerüstet wird, mit seiner ebenen Seite auf das Trägerblech (1) aufgelegt und im Bereich der nach außen vorstehenden noppenartigen Erhöhungen (3) der Sprengstoff aufgelegt und gezündet wird.

2.  Verfahren nach Anspruch 1, dadurch gekennzeichnet, daß die noppenartigen Erhöhungen (3) in einem gleichmäßigen Muster über das aufzuplattierende Blech (2) verteilt sind.

3.  Verfahren nach Anspruch 1, dadurch gekennzeichnet, daß zwischen den miteinander zu verbindenden Blechen (1, 2) eine Evakuierung der Luft erfolgt.